# EUROPEAN PATENT APPLICATION

(11) **EP 4 194 330 A1**
(43) Date of publication of application: **14.06.2023**
(21) Application number: 21853590.4
(22) Date of filing: 06.08.2021
(51) Int. Cl.: B63B 59/08, B63B 59/10, B25J 5/00

(54) **UNDERWATER CLEANING ROBOT SYSTEM**

(30) Priority: 06.08.2020 CN 202010781941
(71) Applicant: Deepinfar Ocean Technology Inc., Tianjin 300457 (CN)
(72) Inventor: WEI, Jiancang, Tianjin 300457 (CN); ZHANG, Yongqiang, Tianjin 300457 (CN); CHEN, Chao, Tianjin 300457 (CN); XIE, Cuifang, Tianjin 300457 (CN)
(74) Representative: Cabinet Bleger-Rhein-Poupon
(86) International application number: PCT/CN2021/111338
(87) International publication number: WO 2022/028611

(57) **Abstract**

Disclosed is an underwater cleaning robot system, comprising an underwater robot (3) and an above-water control platform (1). The underwater robot (3) comprises a cleaning robot (31) and a driving robot (33), the cleaning robot (31) being carried on the driving robot (33). The cleaning robot (31) comprises an electric motor and a pump, the pump being connected to the electric motor, and the electric motor driving the pump to generate high-pressure fluid. The above-water control platform (1) is in communication connection with the cleaning robot (31) and the driving robot (33), and is used for controlling the cleaning robot (31) and the driving robot (33). Only a small neutrally buoyant cable connected between the above-water control platform (1) and the underwater robot (3) is required to increase the range of operation of the underwater robot (3) from 20-30 meters to at least 1000 meters.

## Description

### Technical Field

The disclosure relates to the technical field of underwater robots, in particular to an underwater cleaning robot system.

### Background

Crusts formed by algae, shellfish and other deposits exist on hull bottoms, aquaculture cages, piers and dams. These crusts may cover surface damage, which has a serious adverse impact on detection. Some crusts may not be on top of damage, but they may affect the normal use and service life of covered parts. Therefore, the crusts must be cleaned. It is undoubtedly the best choice to clean the crusts by underwater cleaning robots. There have been related inventions that use underwater cleaning robots to perform underwater cleaning. However, when cleaning work is complicated, usage of the existing underwater cleaning robots is time-consuming and labor-consuming, and the efficiency is low.

### Summary

The disclosure provides an underwater cleaning robot system, which can greatly expand the operation distance and depth of an underwater cleaning robot.

According to the disclosure, an underwater cleaning robot system is provided, comprising an underwater robot and an overwater control platform, the underwater robot comprises a cleaning robot and a driving robot, and the cleaning robot is carried on the driving robot; and the cleaning robot comprises a motor and a pump, the pump is connected to the motor and driven by the motor to generate high-pressure fluid, and the overwater control platform communicates with the cleaning robot and the driving robot to control the cleaning robot and the driving robot.

According to some embodiments, the motor comprises a high-voltage frameless brushless motor. The underwater cleaning robot system further comprises a spray gun, the pump comprises a plunger pump, and the plunger pump is connected to the spray gun to deliver the high-pressure fluid to the spray gun.

According to some embodiments, the pump further comprises a filtering device, and the filtering device is connected to a water inlet of the pump.

According to some embodiments, the cleaning robot comprises a controller, and the controller communicates with the overwater control platform to control the motor.

According to some embodiments, the cleaning robot further comprises a pressure sensor for detecting a pressure in the pump, and the pressure sensor is in signal connection with the controller to transmit pressure data in the pump to the controller.

According to some embodiments, the underwater cleaning robot system further comprises a decelerator, the decelerator is connected to the motor and the pump, and the motor and the decelerator drive the pump to generate a specified constant high pressure.

According to some embodiments, the underwater cleaning robot system further comprises a zero-buoyancy cable, and the zero-buoyancy cable is connected to the overwater control platform, the cleaning robot and the driving robot to realize the communication between the overwater control platform and the cleaning robot and the driving robot.

According to some embodiments, the cleaning robot comprises a watertight joint, and the watertight joint is used for tight connection between the cleaning robot and the zero-buoyancy cable.

According to some embodiments, the underwater cleaning robot system further comprises a wireless connection device, and the wireless connection device is used for the communication between the overwater control platform and the driving robot and the cleaning robot.

According to some embodiments of the present application, by carrying the cleaning robot on the driving robot, a traditional high-pressure water pump can be carried on the driving robot, and the underwater robot can be flexibly operated through the overwater control platform.

For a better understanding of the features and technical contents of the invention, please refer to the following detailed description and drawings of the invention, but the description and drawings are only used to illustrate the invention, but do not limit the scope of protection of the invention in any way.

### Brief Description of the Drawings

The implementation of the disclosure will be described in detail below with reference to the drawings. Here, the drawings that form a part of the disclosure are used to provide a further understanding of the disclosure. The illustrative embodiments of the disclosure and their description are used to explain the disclosure, and do not constitute an improper limitation of the disclosure. In the drawings:
Fig. 1 is a principle block diagram of a robot system for cleaning underwater deposits according to an exemplary embodiment of the present application;
Fig. 2 is a principle block diagram of a robot system for cleaning underwater deposits according to an exemplary embodiment of the present application;
Fig. 3 is a structural diagram of a cleaning robot according to an exemplary embodiment of the present application; and
Fig. 4 is a simulation data line diagram of a brushless motor according to an exemplary embodiment of the present application.

Reference signs: 1. overwater control platform; 3. underwater robot; 31. cleaning robot; 311. controller; 312. brushless motor; 313. base; 314. watertight joint; 315. decelerator; 316. plunger pump; 317. water inlet; 318. spray gun; 319. control valve; 320. pressure sensor; and 33. driving robot.

### Detailed Description of Embodiments

Exemplary embodiments of the disclosure are described below with reference to the accompanying drawings. As those skilled in the art can realize, the described embodiments can be modified in various different ways without departing from the spirit or scope of the disclosure. Therefore, the drawings and description should be regarded as illustrative rather than restrictive in nature.

It should be noted that in this disclosure, the orientation or position relationship indicated by the terms "length", "upper", "lower", "front", "rear", "left", "right", "horizontal", "top", "bottom", "inner" and "outer" are based on the orientation or position relationship shown in the drawings, only for facilitating and simplifying the description of the disclosure, and do not indicate or imply that the indicated device or element must have a specific orientation, or be constructed and operate in a specific orientation, and therefore cannot be understood as a limitation of the disclosure.

A current underwater cleaning robot system is composed of an onshore high-pressure water pump and underwater ROV equipment equipped with a high-pressure gun, which are connected by a high-pressure water pipe and a control line. A high-pressure water pump station and a control cabinet are arranged above water to pressurize water. However, due to their huge sizes and heavy weights, they can only be placed on the shore, and high-pressure water is delivered to an underwater spray gun to be spayed through the high-pressure water pipe, so as to clean underwater targets. Because the high-pressure water pump can only be placed on the shore, and high-pressure water can only be delivered to the underwater spray gun through the high-pressure water pipe, the heavy high-pressure water pipe not only increases the weight of the whole equipment, but also limits the operation range of the underwater cleaning robot, greatly affecting the mobility of the underwater robot. This is a common problem for existing underwater cleaning robot systems. These underwater cleaning robots cannot perform long-distance operation, and the operation range is about 20-30 meters.

Therefore, the inventor thought that the above invention could be improved, and finally put forward an invention with reasonable design and effective improvement through rational application of scientific principles and diligent research.

The technical scheme of this application will be explained in detail below with reference to the drawings.

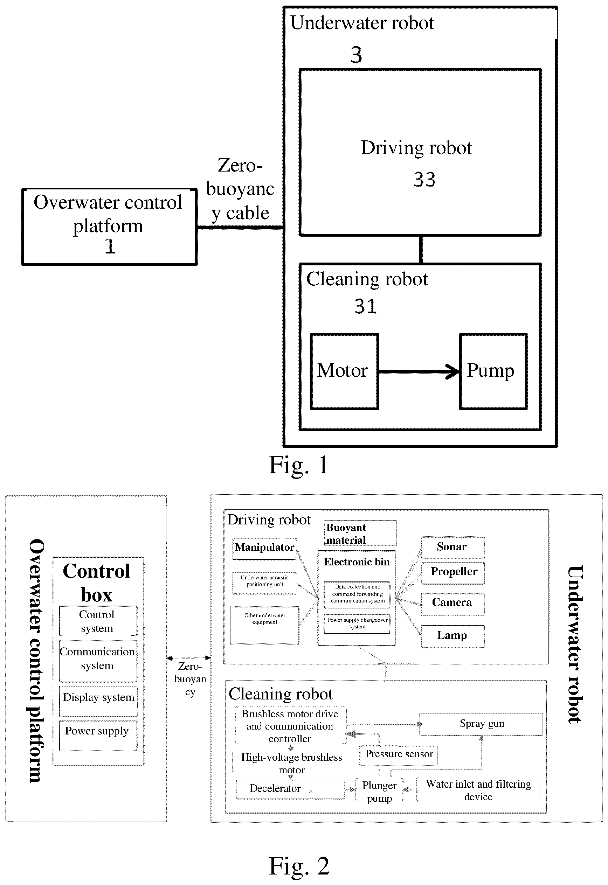

Fig. 1 is a principle block diagram of a robot system for cleaning underwater deposits according to an exemplary embodiment of the present application.

Referring to Fig. 1, according to an exemplary embodiment of the present application, an underwater cleaning robot system comprises an overwater control platform 1 and an underwater robot 3, the underwater robot 3 comprises a cleaning robot 31 and a driving robot 33, and the cleaning robot 31 is carried on the driving robot 33. Of course, the disclosure does not limit the carrying position and direction. In this embodiment, the cleaning robot 31 comprises a motor and a pump, the pump is connected to the motor and driven by the motor to generate high-pressure fluid, and the overwater control platform 1 communicates with the cleaning robot 31 and the driving robot 33 to control the cleaning robot 31 and the driving robot 33.

It should be noted that although in this exemplary embodiment, the cleaning robot 31 works with the driving robot 33, this disclosure is not limited to this. For example, in other embodiments, that are not disclosed, of the invention, the cleaning robot 31 may be used alone (sold for example) or with other components.

In order to explain the underwater cleaning robot system in an exemplary embodiment of the disclosure, the structure of the overwater control platform 1 and the structure of the underwater robot 3 will be described below, and then the connection relationship between the overwater control platform 1 and the underwater robot 3 will be explained. Referring to Fig. 1, the overwater control platform 1 and the underwater robot 3 may be connected into a whole by a zero-buoyancy cable. For another example, connection and control between the overwater control platform 1 and the underwater robot 3 may also be realized by a wireless device. Of course, the overwater control platform 1 and the underwater robot 3 may be connected in other ways, as long as a controlling and controlled relationship between the overwater control platform 1 and the underwater robot 3 is realized.

Fig. 2 is a principle block diagram of a robot system for cleaning underwater deposits according to an exemplary embodiment of the present application.

Referring to Fig. 2, it can be seen that the driving robot 33 in this disclosure is ROV equipment. In this disclosure, the ROV equipment is general ROV equipment, which is made of a buoyant material, so as to reduce the weight of the underwater robot 3. In this disclosure, the material is not specifically limited. The ROV equipment is provided with an electronic bin, a manipulator, an underwater acoustic positioning unit, a sonar, a propeller, a camera and a lamp, thus having great underwater operation capability. Of course, the specific model of the ROV equipment is not limited in this disclosure, and ROV equipment of any models may be equipped with the cleaning robot 31.

As shown in Fig. 2, the overwater control platform 1 in this disclosure comprises a control system, a communication system, a display system, and a power supply. The overwater control platform is arranged in a small control box, which is convenient to carry and arrange, making the use of the overwater control platform convenient and flexible. In the exemplary embodiment of the disclosure, the overwater control platform 1 is connected to the cleaning robot 31 and the driving robot 33 through a zero-buoyancy cable.

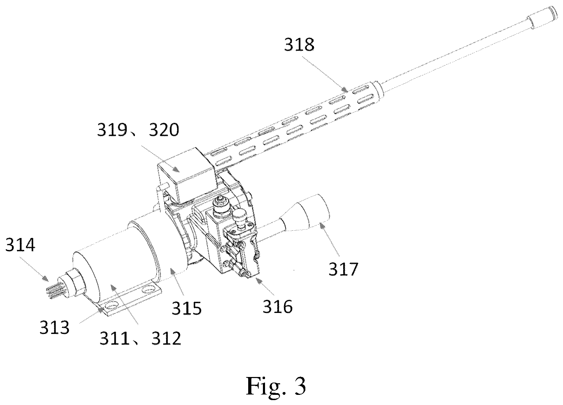

Fig. 3 is a structural diagram of a cleaning robot according to an exemplary embodiment of the present application.

Referring to Fig. 3, according to some embodiments, the cleaning robot 31 in the disclosure comprises a controller 311, a brushless motor 312, a base 313, a watertight joint 314, a decelerator 315, a plunger pump 316, a water inlet 317, a spray gun 318, a control valve 319 and a pressure sensor 320.

In this disclosure, the controller 311 comprises a motor driving controller and a communication controller (not shown), which may be used to control and drive the brushless motor 312. The brushless motor driving controller is used for controlling the rotational speed of the brushless motor 312, and the communication controller is used for communication connection.

As can be seen from Fig. 3, the watertight joint 314 is firmly connected to a connection end of the zero-buoyancy cable of the brushless motor 312. The base 313 is arranged at the bottom of the brushless motor 312 and the controller 311.

In this disclosure, the brushless motor 312 is firmly connected to the decelerator 315. The decelerator 315 is firmly connected to the plunger pump 316. The plunger pump 316 is firmly connected to the spray gun 318. The control valve 319 is connected to the plunger pump 316. The pressure sensor 320 is connected to the plunger pump 316. The pressure sensor 320 is connected to the controller 311.

The brushless motor 312 in the disclosure may be a high-voltage frameless brushless motor with a compact structure and a small size. Of course, the type of the brushless motor is not limited in this disclosure, as long as the cleaning requirement of this embodiment can be met. In the exemplary embodiment of the disclosure, the rated power of the brushless motor 312 is 10 KW, and in order to reduce the current and improve the efficiency, the power supply voltage is set to 800 V. Of course, the specific value is not limited in this disclosure.

The controller 311 in the embodiment of the disclosure may be a controller 311 with a main control chip STM32F303, which controls the rotational speed of the brushless motor 312 and collects communication signals. Of course, the model of the controller is not limited in this disclosure, as long as the cleaning robot 31 of this embodiment can be accurately controlled. For example, in the embodiment of the disclosure, the controller 311 may control the brushless motor 312 through a three-phase full bridge. The controller 311 collects the three-phase current of the brushless motor 312 through a current sensor, and uses a Hall sensor to detect a rotor position, thus controlling the magnetic field orientation of the brushless motor 312, so as to accurately control its rotational speed. For example, in this disclosure, the controller 311 detects and uploads the operation information of the cleaning robot 31 in real time, including operation information of the motor such as power, temperature, rotational speed, torque, water pressure, etc., and also detects and uploads fault information in real time, including over-voltage protection, under-voltage protection, over-temperature protection, over-pressure protection, over-current protection, etc.

Referring to Fig. 3, it can be seen that the base 313 allows the cleaning robot 31 to be firmly connected to the driving robot 33. In addition, by fixing and disassembling the base 313, the cleaning robot 31 and the driving robot 33 can be accurately assembled and disassembled. For example, the cleaning robot 31 and the driving robot 33 may be fixed in a snap-fit or binding manner. Of course, in this disclosure, the fixing mode between cleaning robot 31 and the driving robot 33 is not limited, as long as the cleaning robot 31 and the driving robot 33 can be detachably fixed together.

In this embodiment, the watertight joint 314 is arranged at a position where the cleaning robot 31 is connected with the zero-buoyancy cable, and has sealing and waterproofing functions.

As shown in Fig. 3, in this embodiment, the plunger pump 316 can absorb water and compress water. The specific model of the plunger pump is not limited in this disclosure, and can be determined according to the actual working environment.

In this embodiment, the water inlet 317 is formed in the plunger pump 316. The water inlet 317 is provided with a filter. At the water inlet 317, impurities in water are filtered out through the filter, and then water flows into the plunger pump 316.

Referring to Fig. 3, it can be seen that the spray gun 318 provides a spray channel of high-pressure waterflow generated by the plunger pump 316. The spray gun 318 can accurately spray high-speed waterflow onto a target.

In this embodiment, the control valve 319 is connected to the plunger pump 316, and the pressure sensor 320 is connected to the plunger pump 316 and the brushless motor 312 to collect signal data.

According to the cleaning robot 31 in this disclosure, driving force is generated by the brushless motor 312 and then transmitted to the decelerator 315, and the low-speed high-torque driving force of the decelerator 315 is then transmitted to the plunger pump 316. The plunger pump 316 compresses water which is then sprayed out through the channel of the spray gun 318. The control valve 319 and the pressure sensor 320 detect, collect and adjust the water pressure of the plunger pump 316, and compare the water pressure with a set water pressure. The controller 311 adjusts the rotational speed of the brushless motor 312, so as to realize a constant water pressure.

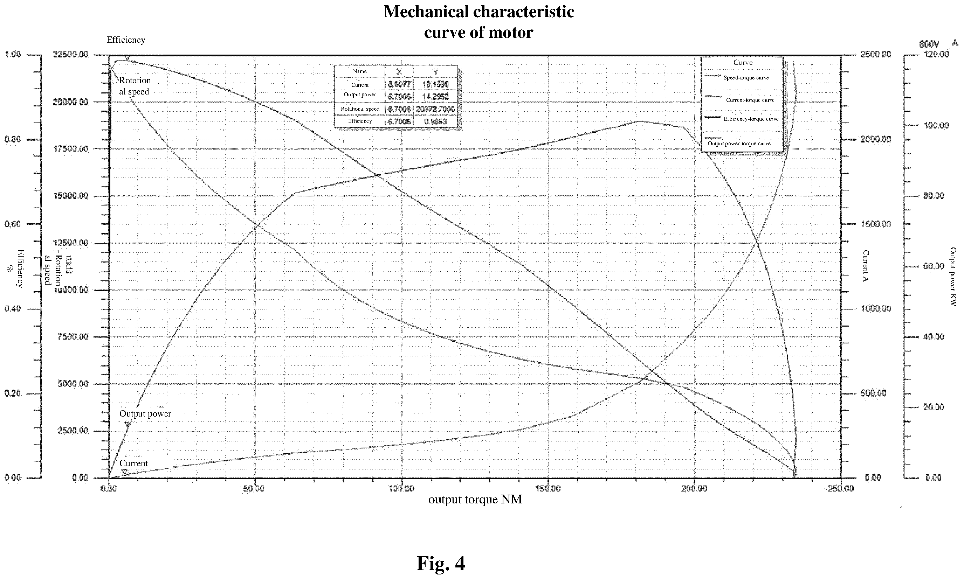

Fig. 4 is a simulation data line diagram of a brushless motor according to an exemplary embodiment of the present application.

Referring to Fig. 4, the decelerator 315 may be a two-stage star decelerator. In this disclosure, the size and model of the decelerator are not limited, as long as it can be connected to the brushless motor 312 in the embodiment of this disclosure, and a small size is realized. In this embodiment, the target rotational speed of the brushless motor 312 is 18000 rpm, the reduction ratio is 12:1, the torque of the brushless motor 312 is 5 NM, and the output torque of the decelerator 315 is 60 NM. Based on the simulation of the brushless motor 312, when the brushless motor 312 is set to have the above data, the efficiency of the brushless motor 312 is optimal. Of course, the specific values are not limited in this disclosure.

In the exemplary embodiment of the disclosure, the underwater robot 3 is connected to the overwater control platform 1 through the zero-buoyancy cable, and operation information of the cleaning robot 31 detected by the controller 311 in real time is transmitted to the overwater control platform 1 through the zero-buoyancy cable. An umbilical cable of the driving robot 33 of the underwater robot 3 is connected to the overwater control platform 1, and operation information of the driving robot 33 detected in real time is transmitted to the overwater control platform 1 through the zero-buoyancy cable. The control system and the communication system of the overwater control platform 1 realize the underwater and overwater transmission of target signals and the error signals through the zero-buoyancy cable. Through the display system of the overwater control platform 1, the underwater situation can be clearly observed, and the operation of the underwater robot 3 can be adjusted in real time. The power supply provides sufficient electric energy for the underwater robot 3 and the overwater control platform 1.

It can be seen from the above that the embodiments of the disclosure have at least one of the following advantages.

According to some embodiments, the underwater cleaning robot 31 system greatly reduces the size of the underwater robot, and the cleaning robot 31 with the high-pressure water pump is carried on the ROV equipment.

According to some embodiments, the overwater control platform 1 is arranged in a small control box, which is convenient to carry and arrange.

According to some embodiments, only a thin zero-buoyancy cable is needed for the connection between the overwater control platform 1 and the underwater robot 3, and the operation range is increased from the original 20-30 meters to over 1000 meters.

The underwater cleaning system in the disclosure realizes a structure which cannot be realized by traditional underwater cleaning robots. In this structure, only the control box is above water, and the cleaning robot with the high-pressure water pump is carried on the ROV equipment serving as the driving robot. For traditional underwater cleaning systems, due to the huge size and heavy weight of a high-pressure water pump, a control cabinet can only be placed above water, but cannot be mounted on an underwater robot, so the structure of the invention cannot be realized at all.

At last, it should be noted that the above embodiments are only exemplary embodiments of the disclosure, and are not intended to limit the disclosure. Although the disclosure has been described in detail with reference to the aforementioned embodiments, it is still possible for those skilled in the art to modify the technical schemes described in the aforementioned embodiments or equivalently replace some of the technical features. Any modification, equivalent substitution, improvement, etc. made within the spirit and principle of this disclosure shall be included in the scope of protection of this disclosure.

## Claims

1. An underwater cleaning robot system, comprising an underwater robot and an overwater control platform, the underwater robot comprising a cleaning robot and a driving robot, and the cleaning robot being carried on the driving robot, wherein
the cleaning robot comprises a motor and a pump, and the pump is connected to the motor and driven by the motor to generate high-pressure fluid; and
the overwater control platform communicates with the cleaning robot and the driving robot to control the cleaning robot and the driving robot.

2. The underwater cleaning robot system of claim 1, wherein the motor comprises a high-voltage frameless brushless motor.

3. The underwater cleaning robot system of claim 1, further comprising a spray gun, wherein the pump comprises a plunger pump connected to the spray gun to deliver the high-pressure fluid to the spray gun.

4. The underwater cleaning robot system of claim 1, wherein the pump further comprises a filtering device connected to a water inlet of the pump.

5. The underwater cleaning robot system of claim 1, wherein the cleaning robot comprises a controller communicating with the overwater control platform to control the motor.

6. The underwater cleaning robot system of claim 5, wherein the cleaning robot further comprises a pressure sensor for detecting a pressure in the pump, and being in signal connection with the controller to transmit pressure data in the pump to the controller.

7. The underwater cleaning robot system of claim 1, further comprising a decelerator connected to the motor and the pump, wherein the motor and the decelerator drive the pump to generate a specified constant high pressure.

8. The underwater cleaning robot system of claim 1, further comprising a zero-buoyancy cable connected to the overwater control platform, the cleaning robot and the driving robot to realize communication between the overwater control platform, the cleaning robot and the driving robot.

9. The underwater cleaning robot system of claim 8, wherein the cleaning robot comprises a watertight joint for tight connection between the cleaning robot and the zero-buoyancy cable.

10. The underwater cleaning robot system of claim 1, further comprising a wireless connection device for communication between the overwater control platform, the driving robot and the cleaning robot.
